# EUROPÄISCHE PATENTSCHRIFT

(11) **EP 2 988 960 B1**
(45) Veröffentlichungstag und Bekanntmachung des Hinweises auf die Patenterteilung: **26.07.2017**
(21) Anmeldenummer: 14707752.3
(22) Anmeldetag: 03.03.2014
(51) Int. Cl.: B60K 7/00, B60K 17/04, B60K 17/26, B62M 6/60, F16H 3/00

(54) **MOTOR-GETRIEBE-EINHEIT SOWIE RADNABENANTRIEB MIT DERARTIGER MOTOR-GETRIEBE-EINHEIT**
MOTOR-GEARING UNIT AND WHEEL HUB DRIVE WITH MOTOR-GEARING UNIT OF SAID TYPE
ENSEMBLE MOTEUR-RÉDUCTEUR ET ENTRAÎNEMENT SUR MOYEU DE ROUE ÉQUIPÉ D'UN TEL ENSEMBLE MOTEUR-RÉDUCTEUR

(30) Priorität: 26.04.2013 DE 102013207681
(43) Veröffentlichungstag der Anmeldung: 02.03.2016
(73) Patentinhaber: Robert Bosch GmbH, 70442 Stuttgart (DE)
(72) Erfinder: ENGELBERG, Ralph, 71254 Ditzingen (DE)
(86) Internationale Anmeldenummer: PCT/EP2014/054066
(87) Internationale Veröffentlichungsnummer: WO 2014/173571

(56) Entgegenhaltungen:
- EP-A1- 2 380 805
- WO-A1-2006/051568
- DE-A1- 19 816 901
- DE-U1- 20 308 315
- FR-A- 1 217 822
- FR-A- 1 334 664
- GB-A- 2 297 364

## Beschreibung

### Stand der Technik

Die vorliegende Erfindung betrifft eine kompakte Motor-Getriebe-Einheit, bei der ein Getriebe unmittelbar an einem Motor, beispielsweise ein Elektromotor, angeordnet ist. Im Folgenden ist stets von Elektromotoren die Rede, die Erfindung ist aber darauf nicht begrenzt. Ferner betrifft die vorliegende Erfindung einen Radnabenantrieb mit einer derartigen Motor-Getriebe-Einheit sowie ein Fahrzeug, insbesondere ein Elektrofahrrad, mit einem derartigen Radnabenantrieb.

Kompakte Motor-Getriebe-Einheiten, welche auch als Getriebe-Motoren bezeichnet werden, sind aus dem Stand der Technik bekannt. Hierbei reduziert ein unmittelbar am Elektromotor angeordnetes Getriebe eine Ausgangsdrehzahl, um insbesondere ein abgegebenes Drehmoment des Elektromotors zu erhöhen. Ferner sind beispielsweise in Verbindung mit Elektrofahrrädern Radnabenantriebe bekannt, welche in eine Radnabe eingebaut sind. Ein Problem derartiger Radnabenantriebe bei Elektrofahrrädern ist jedoch ihr relativ großer Bauraum.

Ein Elektrofahrzeug nach dem Oberbegriff des Anspruchs 1 ist aus WO2006/051568 bekannt.

### Offenbarung der Erfindung

Die erfindungsgemäße Elektrofahrzeug mit den Merkmalen des Anspruchs 1 weist demgegenüber den Vorteil auf, dass der Elektromotor der Motor-Getriebe-Einheit in einem möglichst großen Drehzahlband effizient betrieben werden kann. Dies wird erfindungsgemäß dadurch erreicht, dass der Elektromotor mittels Drehrichtungsumkehr in zwei Richtungen betrieben werden kann, wobei in eine erste Drehrichtung eine erste Übersetzung und in eine zweite Drehrichtung eine zweite, zur ersten Übersetzung unterschiedliche Übersetzung vorgesehen ist. Somit sind zwei Getriebestufen vorgesehen, wobei eine erste Getriebestufe mit einem ersten Freilauf in erster Drehrichtung vorgesehen ist und die zweite Getriebestufe mit einem zweiten Freilauf in eine zweite, der ersten Richtung entgegengesetzte Drehrichtung, vorgesehen ist. Dadurch ist je nach Drehrichtung des Elektromotors jeweils nur eine der beiden Getriebestufen aktiv, während die andere über den Freilauf inaktiv ist. Dadurch kann das erfindungsgemäße Elektrofahrzeug durch Drehrichtungsumkehr zwei verschiedene Getriebestufen aufweisen, wobei ein Aufbau der Motorgetriebeeinheit trotzdem sehr einfach und kompakt ist. Durch die beiden Freiläufe, welche jeweils in unterschiedliche Richtung sperren bzw. freigeben, wird je nach Drehrichtung jeweils nur eine Getriebestufe aktiv, so dass in Abhängigkeit der Drehzahl des Elektromotors jeweils ein günstiger Übersetzungsbereich gewählt werden kann. Hierbei sind zur Änderung der Getriebeübersetzung keine Aktoren oder dergleichen notwendig, sondern der Elektromotor kann lediglich durch eine geänderte Ansteuerung, nämlich seiner Drehrichtung, angesteuert werden, um eine Drehzahländerung zu ermöglichen. Die Änderung der Drehrichtung kann hierbei einfach durch eine Steuerung vorgegeben werden.

Die Unteransprüche zeigen bevorzugte Weiterbildungen der Erfindung.

Vorzugsweise weisen die erste und zweite Getriebestufe eine gemeinsame Eingangswelle und eine gemeinsame Ausgangswelle auf. Hierdurch kann ein besonders kompakter Aufbau erreicht werden. Bei jeder der beiden Getriebestufensind sind hierbei vorzugsweise jeweils Zahnräder an der Eingangswelle und der Ausgangswelle angeordnet. Besonders bevorzugt ist der Elektromotor derart vorgesehen, dass direkt die Eingangswelle des Getriebes angetrieben wird. Mit anderen Worten ist eine Abtriebswelle des Elektromotors identisch mit der Eingangswelle des Getriebes.

Besonders bevorzugt umfasst die erste Getriebestufe ein erstes und ein zweites Zahnrad und die zweite Getriebestufe ein drittes und ein viertes Zahnrad. Dabei sind das erste und dritte Zahnrad auf der Eingangswelle und das zweite und vierte Zahnrad auf der Ausgangswelle angeordnet.

Um an der Ausgangswelle die gleiche Drehrichtung zu erhalten, umfasst vorzugsweise eine der beiden Getriebestufen eine gerade Anzahl von Zahnrädern und die andere der beiden Getriebestufen eine ungerade Anzahl von Zahnrädern. Hierdurch wird bei der Getriebestufe mit der ungeraden Anzahl von Zahnrädern wiederum eine Drehrichtungsumkehr erreicht, um die gleiche Drehrichtung an der Abtriebswelle zu erhalten. Besonders bevorzugt umfasst eine der beiden Getriebestufen genau zwei Zahnräder und die andere der beiden Getriebestufen genau drei Zahnräder.

Um eine Drehzahl an der Abtriebswelle weiter zu reduzieren, umfasst die Motorgetriebeeinheit vorzugsweise ferner ein Vorgelege, welches insbesondere zwischen dem Elektromotor und dem Getriebe angeordnet ist. Gemäß einer bevorzugten Ausgestaltung der Erfindung umfasst das Getriebe ferner ein Abtriebselement, welches an der Ausgangswelle angeordnet ist. Das Abtriebselement ist besonders bevorzugt ein Abtriebszahnrad, welches mit einem anderen Zahnrad, insbesondere einem Hohlrad, kämmt.

Für einen einfachen und kostengünstigen Aufbau sind die beiden Getriebestufen besonders bevorzugt als Stirnradgetriebe ausgebildet.

Ferner betrifft die vorliegende Erfindung ein Elektrofahrzeug umfassend eine Nabe, eine Motor-Getriebe-Einheit und ein Abtriebselement, welches an der Ausgangswelle des Getriebes angeordnet ist und direkt die Nabe antreibt. Vorzugsweise weist die Nabe eine Innenverzahnung auf, welche mit dem Abtriebselement, welches vorzugsweise als Abtriebszahnrad ausgebildet ist, im Eingriff ist, um die Nabe anzutreiben. Besonders bevorzugt ist hierbei die Motor-Getriebe-Einheit vollständig in der Nabe angeordnet. Dadurch kann ein besonders kompakter Aufbau erreicht werden. Ferner schützt die Nabe die Motor-Getriebe-Einheit vor Verschmutzung und Beschädigung oder dergleichen.

Bevorzugt ist der Radnabenantrieb dadurch gekennzeichnet, dass das zweite Zahnrad und das vierte Zahnrad als Hohlräder in der Nabe ausgeführt sind und die Nabe gleichzeitig die Funktion der Abtriebswelle darstellt. Das erfindungsgemäss Fahrzeug ist besonders bevorzugt ein Elektrofahrrad. Der

Radnabenantrieb ist dabei vorzugsweise an einem Hinterrad oder Vorderrad des Elektrofahrrads angeordnet. Weiter bevorzugt ist das Elektrofahrzeug ein E-Scooter oder ein Kleintransportfahrzeug, welche insbesondere von einem zweiten Gang profitieren. Weiter bevorzugt weist das erfindungsgemäße Elektrofahrzeug eine Rekuperationseinrichtung auf.

### Zeichnung

Nachfolgend werden bevorzugte Ausführungsbeispiele der Erfindung unter Bezugnahme auf die begleitende Zeichnung im Detail beschrieben. In der Zeichnung sind gleiche bzw. funktional gleiche Teile in den unterschiedlichen Ausführungsbeispielen jeweils mit den gleichen Bezugszeichen versehen. In der Zeichnung ist:
- Figur 1: eine schematische Ansicht eines Elektrofahrrads gemäß einem ersten Ausführungsbeispiel der Erfindung,
- Figur 2: eine schematische Schnittansicht einer Radnabenanordnung des Elektrofahrrads von Figur 1,
- Figur 3: ein Diagramm, welches die Übersetzungsverhältnisse der Motor-Getriebe-Einheit von Figur 2 zeigt,
- Figur 4: eine schematische, perspektivische Darstellung einer Motor-Getriebe-Einheit gemäß einem zweiten Ausführungsbeispiel der Erfindung,
- Figur 5: ein Diagramm, welches die Übersetzungsverhältnisse der Motor-Getriebe-Einheit von Figur 4 zeigt, und
- Figuren 6 bis 9: Motor-Getriebe-Einheiten gemäß einem dritten, vierten, fünften und sechsten Ausführungsbeispiel.

### Bevorzugte Ausführungsformen der Erfindung

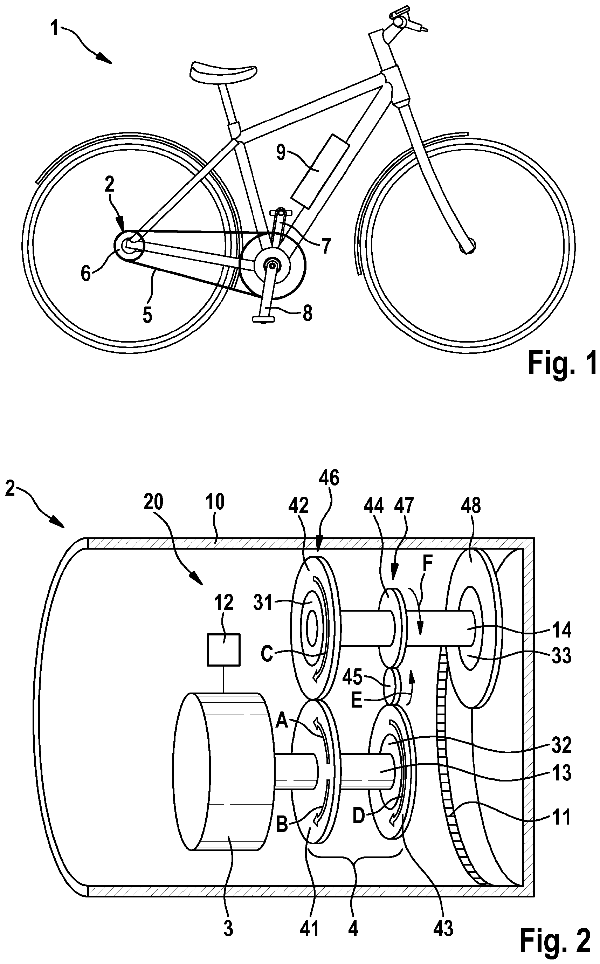

Nachfolgend wird unter Bezugnahme auf die Figuren 1 bis 3 ein Elektrofahrrad 1 mit einer erfindungsgemäßen Motor-Getriebe-Einheit 20 im Detail beschrieben. Wie aus Figur 1 ersichtlich ist, umfasst das Elektrofahrrad 1 einen Radnabenantrieb 2, welcher mit einer Batterie 9 verbunden ist. Ein Fahrrad kann über Kurbeln 7, 8 eine Kette 5 antreiben, welche über ein Ritzel 6 am Hinterrad ein Drehmoment auf das Hinterrad abgeben kann.

Der Radnabenantrieb 2 ist im Detail in Figur 2 gezeigt. Der Radnabenantrieb 2 umfasst eine Radnabe 10 sowie die Motor-Getriebe-Einheit 20. Die Motor-Getriebe-Einheit 20 umfasst einen Elektromotor 3 und ein Getriebe 4. Das Getriebe 4 weist eine erste Getriebestufe 46 und eine zweite Getriebestufe 47 auf.

Die erste Getriebestufe 46 umfasst ein erstes Zahnrad 41, welches auf einer Eingangswelle 13 des Getriebes 4 angeordnet ist, sowie ein zweites Zahnrad 42, welches auf einer Ausgangswelle 14 des Getriebes angeordnet ist. Ferner ist am zweiten Zahnrad 42 ein erster Freilauf 31 angeordnet. Der erste Freilauf 31 stellt sicher, dass das zweite Zahnrad 42 in eine Drehrichtung mitgenommen wird und in die andere Richtung freiläuft.

Die zweite Getriebestufe 47 umfasst ein drittes Zahnrad 43, ein viertes Zahnrad 44 und ein fünftes Zahnrad 45. Das fünfte Zahnrad 45 ist dabei zwischen dem dritten und vierten Zahnrad angeordnet. Ferner umfasst die zweite Getriebestufe 47 einen zweiten Freilauf 32, welcher am dritten Zahnrad 43 angeordnet ist. Der zweite Freilauf 32 stellt sicher, dass sich das dritte Zahnrad 43 in eine Drehrichtung mitdreht und in die andere freiläuft, wobei die Freilaufrichtung bzw. die Sperrrichtung, bezogen auf die Eingangswelle 13 des zweiten Freilaufs 32 genau entgegengesetzt zu der des ersten Freilaufs 31 ist.

Wie weiter aus Figur 2 ersichtlich ist, ist der Elektromotor 3 ebenfalls auf der Eingangswelle 13 des Getriebes 4 angeordnet. Mit anderen Worten ist eine Abtriebswelle des Elektromotors 3 gleich der Eingangswelle 13 des Getriebes. Der Elektromotor 3 wird mittels einer Steuerung 12 angesteuert, wobei die Steuerung 12 eingerichtet ist, eine Drehrichtungsumkehr des Elektromotors zu bewirken. Der Elektromotor 3 kann mit einem Getriebe zur Anpassung der Drehzahl ausgeführt sein.

An der Ausgangswelle 14 ist ferner ein Abtriebszahnrad 48 angeordnet, welches sich mit einer Innenverzahnung 11 an der Hülse 10 im Eingriff befindet. Die Hülse 10 mit Innenverzahnung 11 bildet somit ein Hohlrad, welches mit dem Abtriebszahnrad 48 kämmt. Über die Innenverzahnung 11 wird somit die Radnabe 10 und dadurch das Hinterrad des Elektrofahrrads angetrieben.

Wenn der Elektromotor 3 in eine erste Drehrichtung A angetrieben wird, dreht sich das erste Zahnrad 41 in die gleiche Drehrichtung A. Entsprechend dreht sich das zweite Zahnrad 42 in Richtung des Pfeils C, so dass sich die Ausgangswelle 14 in die gleiche Richtung dreht. Der erste Freilauf 31 sperrt dabei in Drehrichtung C, so dass eine Drehzahlübertragung auf die Ausgangswelle 14 über die erste Getriebestufe 46 möglich ist. Der zweite Freilauf 32 ist dabei derart ausgelegt, dass sich das dritte Zahnrad 43 nicht mitdreht und somit die zweite Getriebestufe 47 nicht aktiv ist.

Wenn die Steuerung 12 eine Drehrichtungsumkehr am Elektromotor 3 vornimmt, dreht sich das erste Zahnrad 41 in Richtung des Pfeils B, wobei jedoch über das zweite Zahnrad 42 keine Drehzahl übertragen wird, da der erste Freilauf 31 eine Übertragung von Drehzahl auf die Ausgangswelle 14 über die erste Getriebestufe 46 verhindert. Dagegen dreht sich das dritte Zahnrad 43 in Richtung des Pfeils D, da in der zweiten Drehrichtung B der zweite Freilauf 32 das dritte Zahnrad 43 sperrt. Entsprechend dreht sich das fünfte Zahnrad 45 in Richtung des Pfeils E und das vierte Zahnrad 44 in Richtung des Pfeils F. Somit ist an der Ausgangswelle 14 wieder die gleiche Drehrichtung, wie bei einer Übertragung der Drehzahl über die erste Getriebestufe 46 vorhanden.

Je nach Drehrichtung des Elektromotors 3 wird die Drehzahl somit jeweils nur über die erste Getriebestufe 46 oder jeweils nur über die zweite Getriebestufe 47 auf die Ausgangswelle 14 übertragen. Am Abtriebszahnrad 48 ist ein dritter Freilauf 33 vorgesehen, welcher die Drehzahlübertragung in der über den Elektromotor 3 angetriebenen Drehrichtung (C, F) der Ausgangswelle 14 ermöglicht, in entgegengesetzter Richtung jedoch nicht. Der dritte Freilauf 33 arbeitet dabei als normaler Freilauf am Elektrofahrrad.

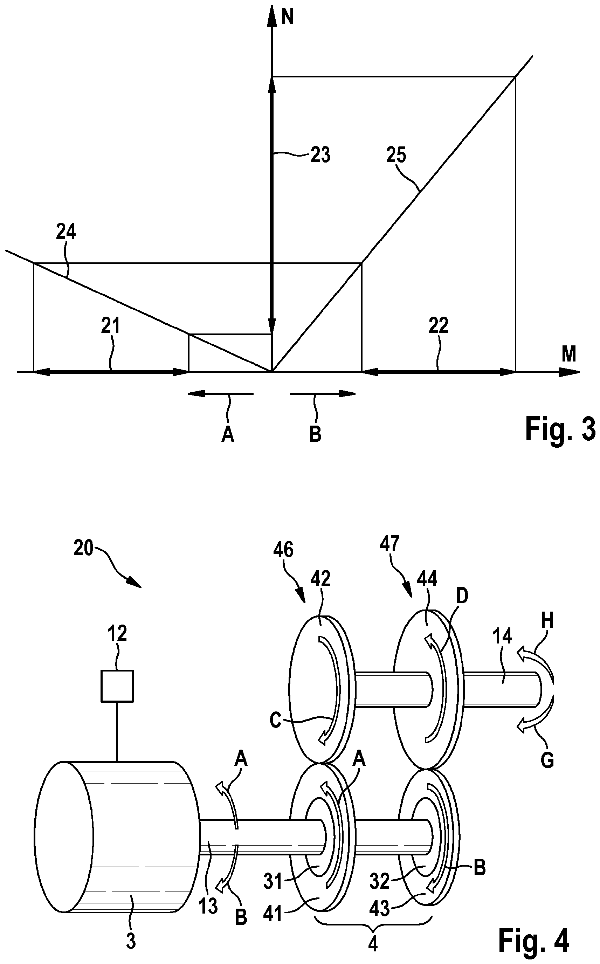

Im Diagramm von Figur 3 ist eine Drehzahl N der Ausgangswelle 14 über einer Drehzahl M des Elektromotors 3 dargestellt. Hierbei ergibt sich in einer ersten Drehrichtung A (linker Teil des Diagramms von Figur 3) mit der ersten Übersetzung 24 der ersten Getriebestufe 46 ein erster Drehzahlbereich 21. Wenn der Elektromotor 3 in die zweite Drehrichtung B (rechter Teil des Diagramms von Figur 3) angetrieben wird, ergibt sich ein zweiter Drehzahlbereich 22. Über die zweite Übersetzung 25 der zweiten Getriebestufe 47 wird ein entsprechender Drehzahlbereich an der Ausgangswelle 14 erhalten. Das Bezugszeichen 23 bezeichnet in Figur 3 dabei den kompletten Drehzahlbereich an der Ausgangswelle 14, welche über die beiden Übersetzungen 24, 25 erhalten wird. Wie aus dem Diagramm von Figur 3 deutlich wird, kann erfindungsgemäß somit durch Drehrichtungsumkehr des Elektromotors ein deutlich größerer Drehzahlbereich 23 an der Ausgangswelle 14 erhalten werden, als dies bei nur einem einstufigen Getriebe möglich wäre.

Somit kann erfindungsgemäß ein kompakter und effektiver Radnabenantrieb 2 vorgesehen werden, welcher vollständig in der Radnabe 10 angeordnet ist. Es sei angemerkt, dass die Steuerung 12 nicht zwangsläufig in der Radnabe 10 angeordnet werden muss, sondern auch an anderer Stelle des Fahrrads vorgesehen sein kann.

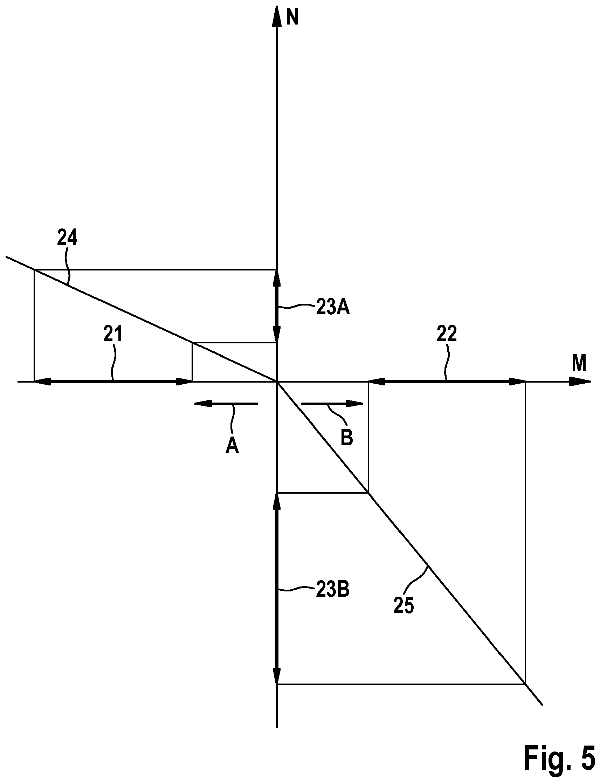

In den Figuren 4 und 5 wird eine Motor-Getriebe-Einheit 20 gemäß einem zweiten Ausführungsbeispiel der Erfindung im Detail beschrieben. Im Unterschied zu dem ersten Ausführungsbeispiel ist beim zweiten Ausführungsbeispiel die erste Getriebestufe 46 und die zweite Getriebestufe 47 derart ausgebildet, dass die Ausgangswelle 14 sich in einer ersten Drehrichtung G dreht, wenn die Drehzahl des Elektromotors 3 über die erste Getriebestufe 46 übertragen wird und in einer zweiten Drehrichtung H dreht, wenn die Drehzahl über die zweite Getriebestufe 47 übertragen wird. Wie aus Figur 4 ersichtlich ist, weisen die beiden Getriebestufen 46, 47 jeweils genau zwei Zahnräder auf. Somit erfolgt bei keiner der beiden Getriebestufen eine zusätzliche Drehrichtungsumkehr durch ein zusätzliches Zahnrad wie im ersten Ausführungsbeispiel. Der erste Freilauf 31 ist dabei am ersten Zahnrad 41 angeordnet und der zweite Freilauf 32 am dritten Zahnrad 43.

Das Diagramm von Fig. 5 zeigt die Drehzahl N der Ausgangswelle 14 über der Drehzahl M des Elektromotors 3. Da im zweiten Getriebe im zweiten Ausführungsbeispiel kein zusätzliches Zahnrad angeordnet ist, ändert sich die Drehrichtung der Abtriebswelle 14 bei einer Änderung der Drehrichtung des Elektromotors 3. Hierdurch kann ein Elektroantrieb mit einem Vorwärtsgang und einem Rückwärtsgang realisiert werden. In der ersten Drehrichtung stellt die erste Übersetzung 24 über den ersten Drehzahlbereich 21 einen ersten Drehzahlbereich 23A an der Ausgangswelle in der ersten Drehrichtung G bereit. Bei einer Drehrichtungsumkehr des Elektromotors 3 stellt die zweite Übersetzung 25 bei einem zweiten Drehzahlbereich 22 des Antriebs einen zweiten Drehzahlbereich 23B an der Ausgangswelle 14 in entgegengesetzter Drehrichtung H bereit.

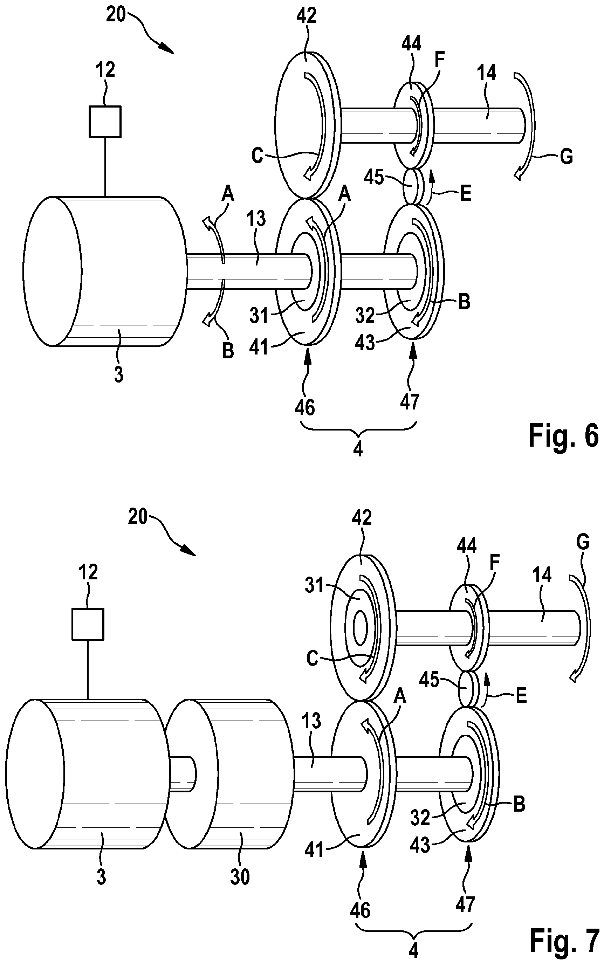

Figur 6 zeigt eine Motor-Getriebe-Einheit 20 gemäß einem dritten Ausführungsbeispiel der Erfindung, welche im Wesentlichen dem zweiten Ausführungsbeispiel entspricht. Im Unterschied zum zweiten Ausführungsbeispiel sind beim dritten Ausführungsbeispiel in der zweiten Getriebestufe 47 noch ein fünftes Zahnrad 45 wie beim ersten Ausführungsbeispiel vorgesehen, um eine Drehrichtungsumkehr in der zweiten Getriebestufe 47 zu erhalten. Dadurch ergibt sich unabhängig von der Wahl der Drehrichtung am Elektromotor 3 jeweils eine gleiche Abtriebsdrehrichtung G an der Ausgangswelle 14.

Das in Figur 7 gezeigte vierte Ausführungsbeispiel entspricht im Wesentlichen dem dritten Ausführungsbeispiel, wobei im Unterschied dazu noch ein Vorgelege 30 angeordnet ist. Das Vorgelege 30 ist zwischen Elektromotor 3 und Getriebe 4 angeordnet und passt die Abtriebsdrehzahl der Elektromotors 3 vor Eingang in der Getriebe 4 an den jeweiligen Bedarf der Anwendung an. Beispielsweise kann das Drehzahlniveau zur Erreichung höherer Momente reduziert werden.

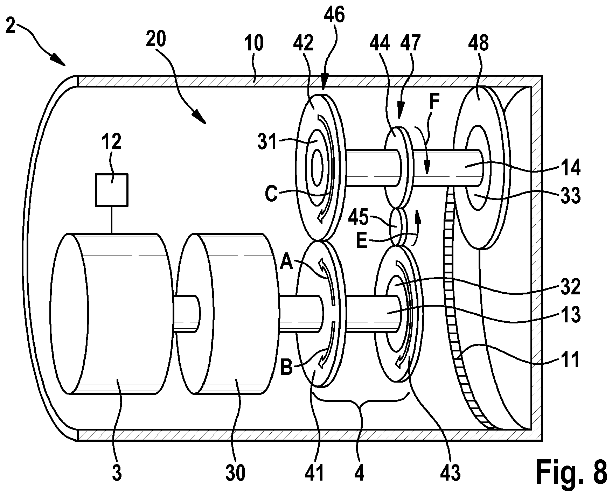

Figur 8 zeigt einen Radnabenantrieb 2 mit einer Motor-Getriebe-Einheit 20 gemäß einem fünften Ausführungsbeispiel der Erfindung. Das fünfte Ausführungsbeispiel entspricht im Wesentlichen dem vierten Ausführungsbeispiel, wobei neben dem Vorgelege 30 zusätzlich noch ein Abtriebszahnrad 48 an der Ausgangswelle 14 angeordnet ist. Das Abtriebszahnrad 48 befindet sich mit der Innenverzahnung 11 an der Radnabe 10 im Eingriff, um die Radnabe 10 zu drehen. Zahnrad 48 und 47 können auch zu einem Bauteil zusammengefasst werden.

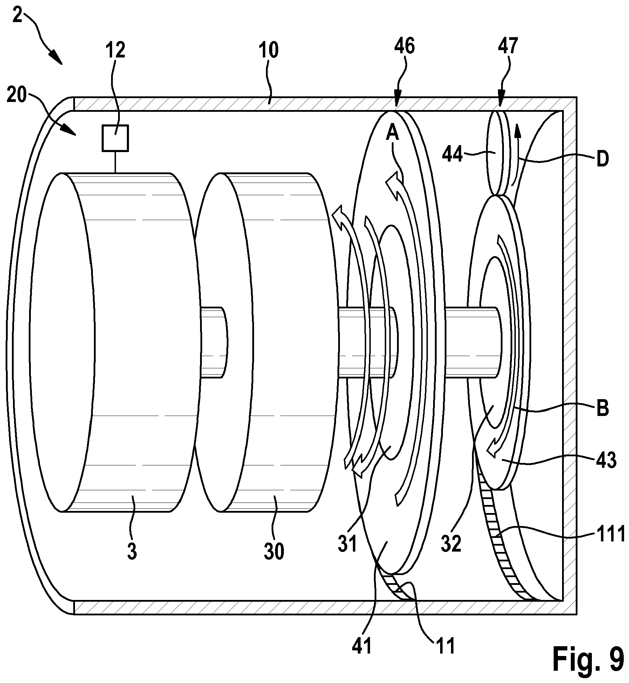

Figur 9 zeigt eine Motor-Getriebe-Einheit 2 gemäß einem sechsten Ausführungsbeispiel der Erfindung, welche im Wesentlichen dem in Fig. 8 gezeigten Ausführungsbeispiel entspricht. Beim sechsten Ausführungsbeispiel ist allerdings keine gemeinsame Abtriebswelle vorgesehen, sondern das erste Zahnrad 41 kämmt mit einer ersten Innenverzahnung 11 der Radnabe 10 und das Zahnrad 44 der zweiten Getriebestufe 47 kämmt mit einer zweiten Innenverzahnung 111 der Radnabe 10. Somit wird bei diesem Ausführungsbeispiel ebenfalls direkt die Radnabe 10 angetrieben. Die erste Getriebestufe 46 in diesem Ausführungsbeispiel umfasst somit nur das erste Zahnrad 41. Es sei jedoch angemerkt, dass hier selbstverständlich auch noch weitere Zahnräder für eine weitere Übersetzung vorgesehen sein könnten. Durch das Vorsehen der beiden Freiläufe 31, 32 dreht sich die Radnabe 10 unabhängig von einer Drehrichtung des Elektromotors 3 jeweils in gleicher Richtung. Dieser Aufbau ist somit noch kompakter und weist eine minimale Teileanzahl auf. Hierdurch kann eine Integration auch der Steuereinheit 12 einfach in die Nabe erfolgen.

Wie aus den oben beschriebenen Ausführungsbeispielen deutlich wird, kann erfindungsgemäß somit eine kompakte Motor-Getriebe-Einheit 20 bereitgestellt werden, welche in einer Radnabe 10 angeordnet ist. Je nach Drehrichtung des Elektromotors werden Drehzahlen über eine erste Getriebestufe 46 oder eine zweite Getriebestufe 47 des Getriebes 4 übertragen. Je nach Ausgestaltung der Getriebestufen kann dabei bei beiden Drehrichtungen des Elektromotors eine Ausgangswelle 14 nur eine einzige Drehrichtung G aufweisen, oder die Ausgangswelle 14 weist alternativ zwei verschiedene Drehrichtungen G, H auf, wie im zweiten Ausführungsbeispiel beschrieben. Dabei weist die erfindungsgemäße Motor-Getriebe-Einheit 20 nur eine minimale Bauteileanzahl auf und ist sehr kompakt und robust. Ein Abtrieb kann dabei beliebig über die Ausgangswelle 14 oder ein an der Ausgangswelle angeordnetes Abtriebselement, wie z.B. das Abtriebszahnrad 48 oder direkt auf die Radnabe 10, erfolgen. Durch die vorliegende Erfindung können somit Anwendungen in einem größeren Drehzahlband realisiert werden, wobei der Elektromotor 3 jeweils in einem optimalen Betriebsbereich effizient betrieben werden kann.

## Patentansprüche

1. Elektrofahrzeug, insbesondere Elektrofahrrad oder E-Scooter oder Kleintransportfahrzeug, umfassend:
- einen Radnabenantrieb mit einer Radnabe (10) und einer Motor-Getriebe-Einheit (20),
- wobei die Motor-Getriebe-Einheit
- einen Elektromotor (3), mit einer ersten und zweiten Antriebsrichtung (A, B),
- ein unmittelbar am Elektromotor angeordnetes Getriebe (4) mit einer Eingangswelle (13) und einer Ausgangswelle (14) und
- eine Steuerung (12), welche eingerichtet ist, den Elektromotor (3) in die erste und zweite Antriebsrichtung anzutreiben,
- wobei das Getriebe (4) eine erste Getriebestufe (46) und eine zweite Getriebestufe (47) aufweist, welche unterschiedliche Übersetzungsverhältnisse aufweisen,
- wobei die erste Getriebestufe (46) einen ersten Freilauf (31) und die zweite Getriebestufe (47) einen zweiten Freilauf (32) aufweist, und
- wobei eine Freilaufrichtung und eine Sperrrichtung des ersten Freilaufs (31) und des zweiten Freilaufs (32) unterschiedlich ist;
umfasst,
- wobei das Getriebe (4) ferner ein Abtriebselement (48) umfasst, welches auf der Ausgangswelle (14) angeordnet ist, und
- wobei das Abtriebselement (48) des Getriebes (4) direkt die Radnabe (10) antreibt.

2. Elektrofahrzeug nach Anspruch 1, **dadurch gekennzeichnet, dass** die erste und zweite Getriebestufe (46, 47) eine gemeinsame Eingangswelle (13) und eine gemeinsame Ausgangswelle (14) aufweisen.

3. Elektrofahrzeug nach Anspruch 2, **dadurch gekennzeichnet, dass** die Eingangswelle (13) des Getriebes (4) auch eine Abtriebswelle des Motors (3) ist.

4. Elektrofahrzeug nach einem der vorhergehenden Ansprüche, **dadurch gekennzeichnet, dass** die erste Getriebestufe (46) ein erstes Zahnrad (41) und ein zweites Zahnrad (42) umfasst und die zweite Getriebestufe (47) ein drittes Zahnrad (43) und ein viertes Zahnrad (44) umfasst, wobei das erste und dritte Zahnrad (41, 43) auf der Eingangswelle (13) angeordnet sind und das zweite und vierte Zahnrad (42, 44) auf der Ausgangswelle (14) angeordnet sind.

5. Elektrofahrzeug nach Anspruch 4, **dadurch gekennzeichnet,**
- **dass** der erste Freilauf (31) am ersten Zahnrad (41) und der zweite Freilauf (32) am dritten Zahnrad (43) angeordnet ist, oder
- **dass** der erste Freilauf (31) am zweiten Zahnrad (42) und der zweite Freilauf (32) am dritten Zahnrad (43) angeordnet ist, oder
- **dass** der erste Freilauf (31) am ersten Zahnrad (41) und der zweite Freilauf (32) am vierten Zahnrad (44) angeordnet ist, oder
- **dass** der erste Freilauf (31) am zweiten Zahnrad (42) und der zweite Freilauf (32) am vierten Zahnrad (44) angeordnet ist.

6. Elektrofahrzeug nach einem der vorhergehenden Ansprüche, **dadurch gekennzeichnet, dass** eine der beiden Getriebestufen (46, 47) eine gerade Anzahl von Zahnrädern umfasst und die andere der beiden Getriebestufen (46, 47) eine ungerade Anzahl von Zahnrädern umfasst, wobei die ungerade Zahl von Zahnrädern vorzugsweise der Drehrichtungsumkehr dient.

7. Elektrofahrzeug nach einem der Ansprüche 1,2,4,5 oder 6, ferner umfassend ein Vorgelege (30), welches insbesondere zwischen dem Elektromotor (3) und dem Getriebe (4) angeordnet ist.

8. Elektrofahrzeug nach einem der vorhergehenden Ansprüche, **dadurch gekennzeichnet, dass** die Radnabe (10) eine Innenverzahnung (11) aufweist, welche mit dem Abtriebselement (48) in Eingriff ist.

9. Elektrofahrzeug nach einem der vorhergehenden Ansprüche, **dadurch gekennzeichnet, dass** das zweite Zahnrad (42) und das vierte Zahnrad (44) als Hohlräder in der Nabe (10) ausgeführt sind und die Nabe (10) gleichzeitig die Funktion der Abtriebswelle (14) darstellt.

## Claims

1. Electric vehicle, in particular electric bicycle or electric scooter or small transport vehicle, comprising:
- a wheel hub drive having a wheel hub (10) and a motor/transmission unit (20),
- the motor/transmission unit comprising
- an electric motor (3), having a first and second drive direction (A, B),
- a transmission (4) which is arranged directly on the electric motor and has an input shaft (13) and an output shaft (14), and
- a controller (12) which is set up to drive the electric motor (3) in the first and second drive direction,
- the transmission (4) having a first transmission stage (46) and a second transmission stage (47) which have different transmission ratios,
- the first transmission stage (46) having a first freewheel (31), and the second transmission stage (47) having a second freewheel (32), and
- a freewheel direction and a locking direction of the first freewheel (31) and of the second freewheel (32) being different,
- the transmission (4) comprising, furthermore, a driven element (48) which is arranged on the output shaft (14), and
- the driven element (48) of the transmission (4) driving the wheel hub (10) directly.

2. Electric vehicle according to Claim 1, **characterized in that** the first and second transmission stage (46, 47) have a common input shaft (13) and a common output shaft (14).

3. Electric vehicle according to Claim 2, **characterized in that** the input shaft (13) of the transmission (4) is also a driven shaft of the motor (3).

4. Electric vehicle according to one of the preceding claims, **characterized in that** the first transmission stage (46) comprises a first gearwheel (41) and a second gearwheel (42), and the second transmission stage (47) comprises a third gearwheel (43) and a fourth gearwheel (44), the first and third gearwheels (41, 43) being arranged on the input shaft (13), and the second and fourth gearwheels (42, 44) being arranged on the output shaft (14).

5. Electric vehicle according to Claim 4, **characterized**
- **in that** the first freewheel (31) is arranged on the first gearwheel (41), and the second freewheel (32) is arranged on the third gearwheel (43), or
- **in that** the first freewheel (31) is arranged on the second gearwheel (42), and the second freewheel (32) is arranged on the third gearwheel (43), or
- **in that** the first freewheel (31) is arranged on the first gearwheel (41), and the second freewheel (32) is arranged on the fourth gearwheel (44), or
- **in that** the first freewheel (31) is arranged on the second gearwheel (42), and the second freewheel (32) is arranged on the fourth gearwheel (44).

6. Electric vehicle according to one of the preceding claims, **characterized in that** one of the two transmission stages (46, 47) comprises an even number of gearwheels, and the other of the two transmission stages (46, 47) comprises an odd number of gearwheels, the odd number of gearwheels preferably serving to reverse the rotational direction.

7. Electric vehicle according to one of Claims 1, 2, 4, 5 or 6, comprising, furthermore, a reduction box (30) which is arranged, in particular, between the electric motor (3) and the transmission (4).

8. Electric vehicle according to one of the preceding claims, **characterized in that** the wheel hub (10) has an internal toothing system (11) which is in engagement with the driven element (48).

9. Electric vehicle according to one of the preceding claims, **characterized in that** the second gearwheel (42) and the fourth gearwheel (44) are configured as internal gears in the hub (10), and the hub (10) at the same time fulfils the function of the driven shaft (14).

## Revendications

1. Véhicule électrique, en particulier bicyclette électrique ou scooter électrique ou petit véhicule de transport, comprenant :
- un entraînement de moyeu de roue avec un moyeu de roue (10) et une unité moteur-réducteur (20),
- l'unité moteur-réducteur comprenant
- un moteur électrique (3), avec un premier et un deuxième sens d'entraînement (A, B),
- un réducteur (4) disposé directement sur le moteur électrique, avec un arbre d'entrée (13) et un arbre de sortie (14), et
- une commande (12) qui est prévue pour entraîner le moteur électrique (3) dans le premier et le deuxième sens d'entraînement,
- le réducteur (4) présentant un premier étage de réducteur (46) et un deuxième étage de réducteur (47) qui présentent des rapports de démultiplication différents,
- le premier rapport de réducteur (46) présentant une première roue libre (31) et le deuxième rapport de réducteur (47) présentant une deuxième roue libre (32), et
- un sens de roulement et un sens de blocage de la première roue libre (31) de la deuxième roue libre (32) étant différents ;
- le réducteur (4) comprenant en outre un élément de prise de force (48) qui est disposé sur l'arbre de sortie (14), et
- l'élément de prise de force (48) du réducteur (4) entraînant directement le moyeu de roue (10).

2. Véhicule électrique selon la revendication 1, **caractérisé en ce que** le premier et le deuxième étage de réducteur (46, 47) présentent un arbre d'entrée commun (13) et un arbre de sortie commun (14).

3. Véhicule électrique selon la revendication 2, **caractérisé en ce que** l'arbre d'entrée (13) du réducteur (4) est également un arbre de prise de force du moteur (3).

4. Véhicule électrique selon l'une quelconque des revendications précédentes, **caractérisé en ce que** le premier étage de réducteur (46) comprend une première roue dentée (41) et une deuxième roue dentée (42) et le deuxième étage de réducteur (47) présente une troisième roue dentée (43) et une quatrième roue dentée (44), la première et la troisième roue dentée (41, 43) étant disposées sur l'arbre d'entrée (13) et la deuxième et la quatrième roue dentée (42, 44) étant disposées sur l'arbre de sortie (14).

5. Véhicule électrique selon la revendication 4, **caractérisé en ce que**
- la première roue libre (31) est disposée sur la première roue dentée (41) et la deuxième roue libre (32) est disposée sur la troisième roue dentée (43), ou
- la première roue libre (31) est disposée sur la deuxième roue dentée (42) et la deuxième roue libre (32) est disposée sur la troisième roue dentée (43), ou
- la première roue libre (31) est disposée sur la première roue dentée (41) et la deuxième roue libre (32) est disposée sur la quatrième roue dentée (44), ou
- la première roue libre (31) est disposée sur la deuxième roue dentée (42) et la deuxième roue libre (32) est disposée sur la quatrième roue dentée (44).

6. Véhicule électrique selon l'une quelconque des revendications précédentes, **caractérisé en ce que** l'un des deux étages de réducteur (46, 47) comprend un nombre pair de roues dentées et l'autre des deux étages de réducteur (46, 47) comprend un nombre impair de roues dentées, le nombre impair de roues dentées servant de préférence à inverser le sens de rotation.

7. Véhicule électrique selon l'une quelconque des revendications 1, 2, 4, 5 ou 6, comprenant en outre un arbre intermédiaire (30) qui est notamment disposé entre le moteur électrique (3) et le réducteur (4).

8. Véhicule électrique selon l'une quelconque des revendications précédentes, **caractérisé en ce que** le moyeu de roue (10) présente une denture intérieure (11) qui est en prise avec l'élément de prise de force (48).

9. Véhicule électrique selon l'une quelconque des revendications précédentes, **caractérisé en ce que** la deuxième roue dentée (42) et la quatrième roue dentée (44) sont réalisées sous forme de roues creuses dans le moyeu (10) et le moyeu (10) assure simultanément la fonction d'arbre de prise de force (14).
